# EUROPÄISCHE PATENTSCHRIFT

(11) **EP 3 041 707 B1**
(45) Veröffentlichungstag und Bekanntmachung des Hinweises auf die Patenterteilung: **16.01.2019**
(21) Anmeldenummer: 14759185.3
(22) Anmeldetag: 04.09.2014
(51) Int. Cl.: B60N 2/68, B60N 2/22, B29C 70/68, B29C 70/86, B32B 5/02, B32B 5/10, B32B 5/26, B32B 15/14, B32B 15/18, B32B 3/26, B29L 31/00, B29L 31/30, B29C 64/386

(54) **COMPOSITE-BAUTEIL FÜR EINEN FAHRZEUGSITZ SOWIE FAHRZEUGSITZ**
COMPOSITE COMPONENT FOR A VEHICLE SEAT, AND VEHICLE SEAT
PIÈCE COMPOSITE POUR UN SIÈGE DE VÉHICULE ET SIÈGE DE VÉHICULE CORRESPONDANT

(30) Priorität: 05.09.2013 DE 102013217736; 21.11.2013 DE 102013223834
(43) Veröffentlichungstag der Anmeldung: 13.07.2016
(73) Patentinhaber: Adient Luxembourg Holding S.à r.l., 1855 Luxembourg (LU)
(72) Erfinder: TER STEEG, Willem Jan, 50259 Pulheim (DE); KRAMM, Lars, 67705 Trippstadt (DE); BOLD, Jens, 50674 Köln (DE); FISCHER, Georg-Ludwig, 67722 Winnweiler (DE); WOLSIEFER, Harald, 67706 Krickenbach (DE); RIEDEL, Ulrich, 81925 München (DE)
(74) Vertreter: Liedhegener, Ralf
(86) Internationale Anmeldenummer: PCT/EP2014/068860
(87) Internationale Veröffentlichungsnummer: WO 2015/032869

(56) Entgegenhaltungen:
- EP-A2- 1 795 444
- WO-A1-2010/101874
- WO-A1-2013/005308

## Beschreibung

Die Erfindung betrifft ein Composite-Bauteil für einen Fahrzeugsitz, insbesondere für einen Kraftfahrzeugsitz, mit mehreren Gewebelagen aus einem Fasermaterial, einem die Gewebelagen fixierenden Matrixmaterial und einem zwischen wenigstens zwei der Gewebelagen angeordneten Einlegeteil zur lokalen Verstärkung des Composite-Bauteils. Die Erfindung betrifft zudem Fahrzeugsitz, insbesondere einen Kraftfahrzeugsitz.

### Stand der Technik

Aus dem Stand der Technik sind Bauteile für Fahrzeugsitze aus Faserverbundwerkstoffen bekannt, die aus einzelnen Gewebelagen, die aus Fasermaterial bestehen, und aus einem das Fasermaterial umgebenden Matrixmaterial aufgebaut sind, so dass die Gewebelagen in das Matrixmaterial eingebettet sind. Diese Bauteile werden auch als Composite-Bauteile bezeichnet. Die Herstellung kann beispielsweise als Handlaminat oder durch ein nicht automatisiertes Resin Transfer Molding-Verfahren (RTM) erfolgen.

Die Verbindung eines durch äußere Kräfte hochbelastbaren Composite-Bauteils mit einer benachbarten Struktur, beispielsweise die Anbindung einer Carbonlehne eines Fahrzeugsitzes an einen Lehnenneigungseinstellbeschlag, bedingt das lokale Verstärken des Composite-Bauteils mit einem hochfesten Einlegeteil, das zwischen einzelnen Gewebelagen angeordnet und somit fest in das Composite-Bauteil integriert ist. Als Einlegeteile werden insbesondere Stahlblechteile verwendet. Unter hoher Belastung des Composite-Bauteils kann es zu einer unerwünschten, sogenannten Messerwirkung kommen, bei der das Einlegeteil das Composite-Bauteil innerlich zerschneidet und somit zerstört. Die Messerwirkung tritt insbesondere in der Ebene des Einlegeteils und in einem Bereich, der außerhalb des durch das Einlegeteil verstärkten Bereichs liegt, auf. Dieser Effekt kann nur geringfügig reduziert werden, indem die Kanten des Einlegeteils in einem aufwändigen Fertigungsschritt bearbeitet, insbesondere entschärft werden.

Aus der WO 2013/005308 A1 ist ein Composite-Bauteil für einen Fahrzeugsitz bekannt, insbesondere für einen Kraftfahrzeugsitz, mit mehreren Gewebelagen aus einem Fasermaterial, einem die Gewebelagen fixierenden Matrixmaterial und einem zwischen wenigstens zwei der Gewebelagen angeordneten Einlegeteil zur lokalen Verstärkung des Composite-Bauteils.

Die EP 1 795 444 A2 offenbart eine Sitzstützvorrichtung mit einer Sitztragbalkeneinheit, die zur Aufnahme eines Drehmoments zumindest zwei Kraftaufnahmeelemente aufweist, deren Längsachsen sich in einem Schnittpunkt oberhalb zumindest einer Deckseite der Sitztragbalkeneinheit schneiden. Um in seitlichen Eckbereichen eines unteren Grundkörperelements einen Freiraum möglichst zu vermeiden, ist in den Eckbereichen jeweils ein im Querschnitt im Wesentlichen dreieckiger Einlegekörper eingelegt.

### Aufgabe

Der Erfindung liegt die Aufgabe zu Grunde, in einem mit einem Einlegeteil verstärkten Composite-Bauteil für einen Fahrzeugsitz die zuvor beschriebene, durch das Einlegeteil verursachte, Messerwirkung zu vermeiden oder zumindest deutlich zu reduzieren. Die Lösung soll es zudem ermöglichen, dass das Composite-Bauteil durch eine automatisierte Fertigung, insbesondere im RTM-Verfahren, hergestellt werden kann. Das Composite-Bauteil soll insbesondere für einen Einsatz in einem Fahrzeugsitz geeignet sein und die Festigkeit und Crashsicherheit eines Fahrzeugsitzes durch den Einsatz eines solchen Composite-Bauteils erhöhen.

### Lösung

Diese Aufgabe wird erfindungsgemäß durch ein Composite-Bauteil für einen Fahrzeugsitz, insbesondere für einen Kraftfahrzeugsitz, mit mehreren Gewebelagen aus einem Fasermaterial, einem die Gewebelagen fixierenden Matrixmaterial und einem zwischen den Gewebelagen angeordneten Einlegeteil zur lokalen Verstärkung des Composite-Bauteils gelöst, wobei ein Einlegestrang zumindest abschnittsweise entlang einer Kante oder einer Kantenfläche des Einlegeteils angeordnet ist.

Ein zwischen wenigstens zwei der Gewebelagen angeordnetes Einlegeteil befindet sich vorzugsweise zwischen genau zwei nebeneinander angeordneten Gewebelagen von einer Vielzahl von Gewebelagen. Einzelne Gewebelagen können sich jedoch auch im Bereich des Einlegeteils auf einer Seite des Einlegeteils überlappen, so dass das Einlegeteil zwischen mehreren Gewebelagen angeordnet sein kann. Die Anzahl der auf jeweils einer Seite des Einlegeteils übereinander liegenden Gewebelagen ist nicht erfindungsrelevant und insofern nicht begrenzt.

Dadurch, dass ein Einlegestrang zumindest abschnittsweise entlang einer Kante oder einer Kantenfläche des Einlegeteils angeordnet ist, wird die Kante beziehungsweise die Kantenfläche von dem Einlegestrang abgedeckt. Dadurch kann ein unmittelbarer Kontakt zwischen der scharften Kante bzw. der Kantenfläche und den angrenzenden Gewebelagen und dem angrenzenden Matrixmaterial des Composite-Bauteils vermieden werden und somit auch eine Messerwirkung innerhalb des Composite-Bauteils vermieden werden. Darüber hinaus kann eine begrenzte Verschiebung des Einlegeteils innerhalb des Composite-Bauteils kompensiert werden, ohne den Verbund des Composite-Bauteils zu belasten oder zu zerstören.

Vorteilhafte Ausgestaltungen, welche einzeln oder in Kombination miteinander eingesetzt werden können, sind Gegenstand der Unteransprüche. Vorteilhafterweise ist das Einlegeteil flach ausgeführt, beispielsweise aus einem Blech ausgeschnitten. Ein flaches Einlegeteil lässt sich problemlos zwischen einzelne Gewebelagen des Composite-Bauteils anordnen. In Bereichen um das Einlegeteil herum liegen die Gewebelagen, zwischen denen sich das Einlegeteil befindet, aneinander an und werden mit Matrixmaterial zueinander fixiert. Vorzugsweise ist eine flächige Seite des Einlegeteils von einer ersten Lage aus Gewebelagen und Matrixmaterial bedeckt und eine weitere flächige Seite des Einlegeteils von einer zweiten Lage aus Gewebelagen und Matrixmaterial bedeckt. Die erste Lage und die zweite Lage sind neben dem Einlegeteil mittels Matrixwerkstoff miteinander verbunden.

Das Einlegeteil kann eine Schnittstelle zur Verbindung des Composite-Bauteils mit einem benachbarten Bauteil aufweisen, beispielsweise eine Gewindebuchse mit einem Innengewinde zum Anschrauben eines Zusatzbauteils. Um eine unmittelbare Zugänglichkeit der Schnittstelle zu gewährleisten, ist es von Vorteil, wenn das Einlegeteil lokal von Gewebelagen und Matrixmaterial unbedeckt ist, beispielsweise im Bereich eines Gewindes.

Unter dem Begriff Einlegestrang sind längliche Profile, insbesondere mit gleichbleibendem Querschnitt zu verstehen, wie diese beispielsweise durch Strangpressen erzeugt werden können. Grundsätzlich ist die Erfindung jedoch auch mit Einlegesträngen ausführbar, deren Querschnitte sich entlang des Strangverlaufs ändern.

Unter dem Begriff Kantenfläche ist insbesondere eine in der Höhe durch die Blechdicke des Einlegeteils definierte Fläche zu verstehen, während eine Kante eine Linie, insbesondere auf einer Kantenfläche, ist.

In einem Übergangsbereich zwischen dem Einlegeteil und einem monolithischen Bereich aus Gewebelagen und Matrixmaterial ist aufgrund von minimal zulässigen Biegeradien der Gewebelagen ein im Querschnitt dreieckiger, insbesondere keilförmiger Bereich ohne Gewebelagen gebildet. Vorzugsweise ist dieser Bereich mit dem Einlegestrang weitgehend ausgefüllt. Die Profilform des Einlegestrangs ist jedoch nicht notwendigerweise durch die minimal zulässigen Biegeradien der Gewebelagen vorgegeben, sondern ist frei wählbar und an die Lastsituationen und die verwendeten Matrix- und Fasermaterialien anpassbar.

Der Querschnitt des Einlegestrangs ist vorzugsweise annähernd dreieckförmig oder keilförmig. Die Ecken des Querschnitts des Einlegestrangs sind dabei vorzugsweise abgerundet. Dadurch erfolgt ein kontinuierlicher, sanfter Übergang zwischen dem monolithischen Composite-Bauteilbereich und dem Sandwichaufbau (Composite - Einleger - Composite), der den Kraftfluss innerhalb der eigentlichen Gewebelagen optimal steuert.

Im Vergleich zu den Gewebefasern weist das Material des Einlegestrangs vorzugsweise eine geringere Festigkeit und/oder eine geringerer Härte auf. In einem Carbonbauteil wird vorteilhaft ein Einlegestrang aus Glasfasern eingesetzt.

Ein besonders kostengünstiger Einlegestrang ist als Gummiband oder Kunststoffband ausgebildet.

Das Einlegeteil ist vorzugsweise ein Stanzteil, insbesondere aus Stahl, das kostengünstig mittels eines Stanzwerkzeugs hergestellt ist. Ein eventuell während des Stanzens entstehender Stanzgrat muss nicht entfernt werden, da dieser aufgrund des Einlegestrangs das Composite-Bauteil innerlich nicht beschädigen kann.

Indem das Composite-Bauteil als Lehnenstruktur für einen Fahrzeugsitz oder als Bestandteil einer Lehnenstruktur für einen Fahrzeugsitz ausgebildet ist, und ein Einlegeteil zur Anbindung der Lehnenstruktur an einen Beschlag umfasst, können hochfeste Lehnenstrukturen zur Verfügung gestellt werden, über deren Anbindungsstellen zu den Beschlägen hohe Kräfte und Momente geleitet werden können. Als Beschläge kommen vorzugsweise Rastbeschläge, wie beispielsweise aus der WO 2011/029522 A2 bekannt, oder Getriebebeschläge, wie beispielsweise aus der WO 2011/029520 A2 bekannt, zum Einsatz.

Die äußere Bauteilkontur des Composite-Bauteils ist zumindest abschnittsweise durch einen in das Matrixmaterial eingebetteten Gewebestrang gebildet. Dadurch kann auf ein nachträgliches Beschneiden der Bauteilkontur verzichtet werden.

Der Gewebestrang ist zur Anbindung an die Gewebelagen in das Matrixmaterial eingebettet und somit zumindest teilweise von Matrixmaterial umgeben. Unter dem Begriff eingebettet ist ein vollständiges oder ein teilweises Ummanteln des Gewebestrang-Gewebes mit Matrixmaterial oder ein vollständiges Durchdringen oder ein teilweises Durchdringen des Gewebes mit Matrixmaterial sowie jede Kombination hieraus zu verstehen.

Der Gewebestrang ist vorzugsweise als ein Gewebeschlauch oder ein Geflechtschlauch ausgeführt. Ein Unterschied des Geflechtschlauches zum Gewebeschlauch besteht darin, dass beim Flechten des Geflechtschlauches die Fäden nicht rechtwinklig zugeführt werden. Alternativ ist der Gewebestrang als ein Gewebeband oder eine Litze, d.h. ein weitgehend flaches, insbesondere zweidimensionales Geflecht ausgeführt. An sich bekannte Gewebeschläuche und Geflechtschläuche bzw. Gewebebänder und Litzen, die kostengünstig verfügbar sind, können als Gewebestrang verwendet werden, was die Bauteilkosten reduziert. Der Begriff Gewebestrang ist als Sammelbegriff für länglich ausgebildete, an sich bekannte Gewebe und Geflechte, unabhängig von Winkellagen der Fasern untereinander oder absolut, zu verstehen.

Das Composite-Bauteil umfasst fertig vorkonfektionierte Gewebelagen. Während des Herstellungsprozesses werden insbesondere die Gewebelagen und ein Geflechtschlauch, vorzugsweise durch einen Roboter, in einem Werkzeug positioniert. Bei geringen Stückzahlen kann die Positionierung jedoch auch manuell erfolgen.

Die Aufgabe wird zudem durch einen Fahrzeugsitz mit einem erfindungsgemäßen Composite-Bauteil gelöst. Ein derartiger Fahrzeugsitz bietet eine hohe Festigkeit und eine hohe Steifigkeit bei einem geringem Gewicht.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine perspektivische Ansicht eines ungepolsterten Fahrzeugsitzes mit einer Lehne gemäß dem Ausführungsbeispiel,
- Fig. 2:: eine Seitenansicht des ungepolsterten Fahrzeugsitzes aus Fig. 1,

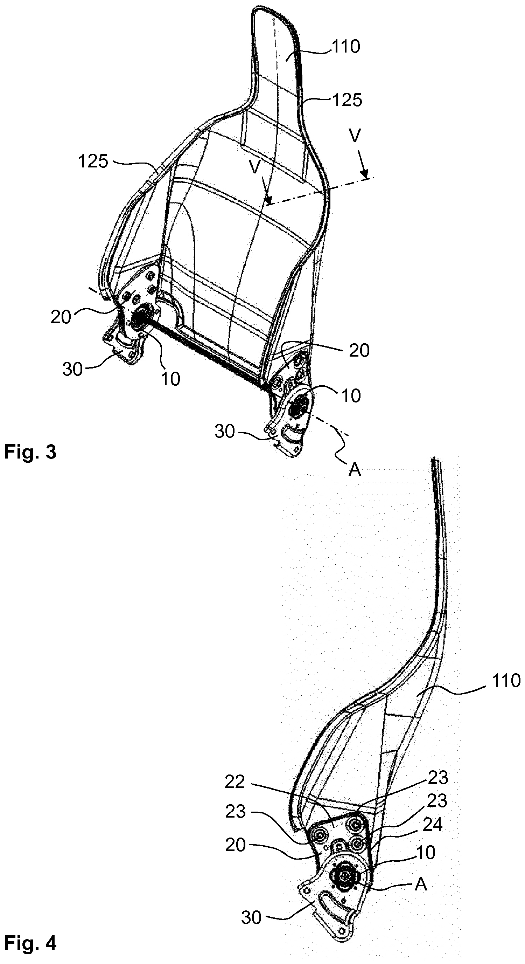

- Fig. 3:: eine perspektivische Ansicht der Lehne aus Fig. 1,
- Fig. 4:: eine Seitenansicht der Lehne aus Fig. 1,
- Fig. 5:: einen Schnitt entlang der Linie V - V in Fig. 3,
- Fig. 6:: eine perspektivische Rückansicht der Lehne aus Fig. 1,
- Fig. 7:: eine Detailansicht aus Fig. 6 und
- Fig. 8:: einen Schnitt entlang der Linie VIII - VIII in Fig. 7.

Ein vorliegend als Sportsitz ausgebildeter Fahrzeugsitz 1 für ein Kraftfahrzeug weist eine Sitzlehne und einen Sitzunterbau auf. Die Sitzlehne und der Sitzunterbau sind mittels zweier an sich bekannter Beschläge 10 miteinander verbunden. Dazu weist jeder der beiden Beschläge 10 ein mit einer als Composite-Bauteil ausgeführten Lehnenstruktur 110 der Sitzlehne verbundenes Beschlagoberteil 20 und ein mit einer Sitzunterbaustruktur 210 des Sitzunterbaus verbundenes Beschlagunterteil 30 auf. Das Beschlagoberteil 20 und das Beschlagunterteil 30 sind über einen an sich bekannten Beschlagmechanismus, beispielsweise einen Rastbeschlag oder einen Getriebebeschlag, relativ zueinander verstellbar, so dass die Neigung der Lehnenstruktur 110 um eine Lehnenschwenkachse A einstellbar ist.

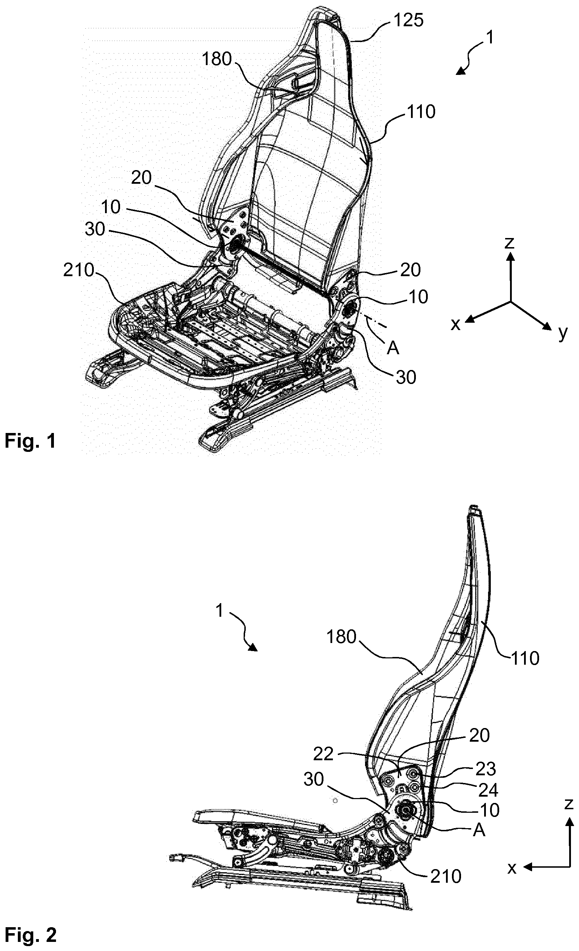

Der in Figur 1 ungepolstert dargestellte Fahrzeugsitz 1 wird nachfolgend unter Verwendung von drei senkrecht aufeinander stehenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Sitzlehne und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Die Lehnenstruktur 110 ist seitlich und von hinten mit einer Designschale 180 abgedeckt, die in den Figuren 1 und 2 im Halbschnitt dargestellt ist. Auf der Vorderseite der Lehnenstruktur 110 ist bei einem gepolsterten Fahrzeugsitz 1 ein in den Figuren nicht dargestelltes Schaumteil angeordnet. Das Schaumteil ist mit einem ebenfalls in den Figuren nicht dargestellten Bezug abgedeckt, dessen äußeren Randkonturen an der Designschale 180 oder alternativ an der Lehnenstruktur 110 befestigt sind, so dass der Bezug und die Designschale 180 die Lehnenstruktur 110 und das Schaumteil zwischen sich aufnehmen. In einer Abwandlung des Ausführungsbeispiels entfällt die Designschale 180 und die Rückseite der Lehnenstruktur 110 bildet die hinterste sichtbare Fläche der Lehne.

Die Designschale 180 und der Bezug definieren das äußere Design der Sitzlehne, ohne wesentlich zur Festigkeit der Sitzlehne beizutragen. Die Designschale 180 ist vorliegend ein Spritzgussteil aus einem an sich bekannten Kunststoff. Der Bezug besteht vorzugsweise weitgehend aus Stoff und/oder Leder.

Die Lehnenstruktur 110 ist ein lasttragendes Strukturteil des Fahrzeugsitzes 1. Die auf die Sitzlehne wirkenden Kräfte, insbesondere Crashkräfte, werden weitgehend von der Lehnenstruktur 110 aufgenommen und über die Beschläge 10 in die Sitzunterbaustruktur 210 weitergeleitet.

Die Lehnenstruktur 110 ist ein Composite-Bauteil und weist eine Schalenbauweise aus einem Verbundwerkstoff auf. Vorliegend umfasst die Lehnenstruktur 110 einen Verbund aus einem Harz, insbesondere einem Epoxydharz, als Matrixmaterial 118 und einer Vielzahl von das Matrixmaterial 118 verstärkenden Kohlenstofffasern, auch Carbonfasern genannt.

Die Carbonfasern sind in mehreren Gewebelagen 116 angeordnet, wobei jede der Gewebelagen 116 ein dreidimensional geformtes Flächengebilde ist, insbesondere ein multiaxiales Flächengebilde, bei dem die Carbonfasern in unterschiedlichen Richtungen zueinander angeordnet sind und ein Gewebe bilden. In einer Abwandlung des Ausführungsbeispiels sind die Fasern unidirektional angeordnet oder es ist ein Gelege verwendet.

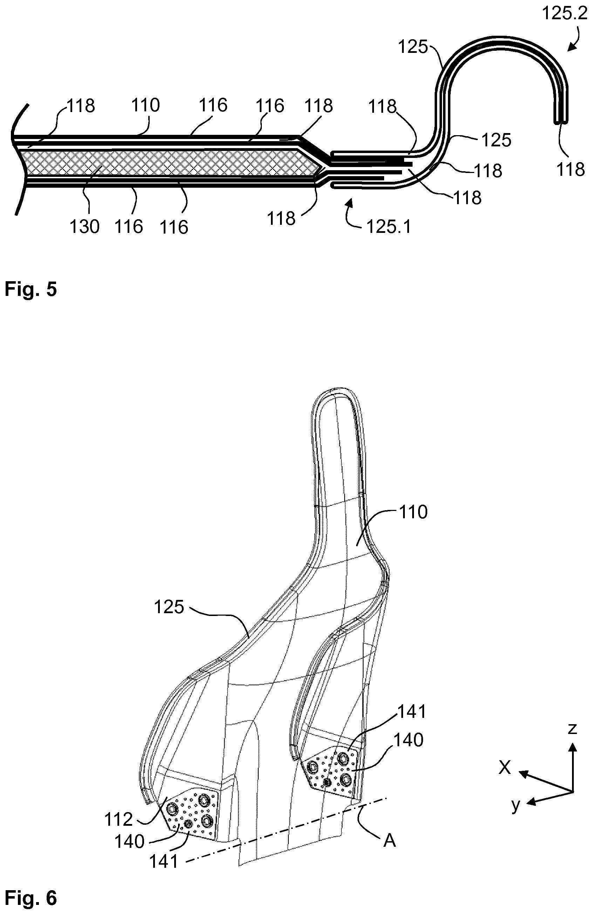

Die Gewebelagen 116 sind von dem Matrixmaterial 118 umgeben und durchdrungen, indem die Lehnenstruktur 110 beispielsweise mittels eines Resin Transfer Molding-Verfahrens (RTM) oder eines anderen an sich bekannten Verfahrens zur Herstellung von carbonfaserverstärkten Kunststoffbauteilen hergestellt ist. Zwischen einzelnen Gewebelagen 116 sind über weite Bereiche der Lehnenstruktur 110 abschnittsweise ein Kern 130 oder alternativ mehrere Kerne 130 angeordnet. Figur 5 zeigt einen Schnitt durch die Lehnenstruktur 110 in einem einen Kern 130 aufweisenden Bereich. Der Kern 130 ist zwischen zwei annähernd gleich dicken Lagen von jeweils mehreren mit Matrixmaterial 118 umgebenen Gewebelagen 116 angeordnet. Dadurch entsteht ein Sandwichaufbau aus dem Kern 130 und dem aus Gewebelagen 116 und Matrixmaterial 118 bestehenden Verbundwerkstoff.

Der Kern 130 besteht aus einem steifen Schaum oder alternativ aus einem weichen Schaum, beispielsweise aus PVC-Schaum und dient der Energieaufnahme und Energieabsorption, beispielsweise im Falle eines Unfalls.

Der äußere, umlaufende Randbereich der Lehnenstruktur 110 ist abschnittweise durch zwei in Matrixmaterial 118 eingebettete, flache, aber dreidimensional geformte Geflechtschläuche 125 gebildet, die entlang der Außenkontur der Lehnenstruktur 110 verlaufen. Flach bedeutet vorliegend, dass jeder Geflechtschlauch 125 keinen oder nur einen sehr kleinen inneren Hohlraum hat. Jeder der beiden Geflechtschläuche 125 ist aus einem Schlauch mit beispielsweise ursprünglich rundem Querschnitt zusammengepresst, so dass - wie in Figur 5 erkennbar - der Querschnitt eines jeden der beiden Geflechtschläuche 125 einen Schlauchabschnitt aufweist, der in seiner Länge etwa der Hälfte des Innenumfangs des Querschnitts des Geflechtschlauches 125 entspricht und dem übrigen Schlauchabschnitt sehr dicht gegenüber liegt oder an diesem anliegt. Der eventuell vorhandene kleine Hohlraum ist vorliegend und vorzugsweise mit Matrixmaterial 118 gefüllt.

Jeder der beiden Geflechtschläuche 125 besteht aus einem Carbonfasergewebe, vorliegend mit einer +/- 45° Faserorientierung.

Der Querschnitt der beiden flachen Geflechtschläuche 125 ist jeweils annähernd S-förmig geformt. Die beiden Geflechtschläuche 125 sind zueinander benachbart und in weitgehend gleicher Lage zueinander ausgerichtet. In einem ersten Endbereich 125.1 des Querschnittes beider Geflechtschläuche 125, der in Richtung der Mitte der Lehnenstruktur 110 ausgerichtet ist, nehmen die beiden Geflechtschläuche 125 die äußeren Ränder der einzelnen Gewebelagen 116 zwischen sich auf. Dadurch überlappen die Schläuche die äußeren Ränder der Gewebelagen 116. Die äußeren Ränder der einzelnen Gewebelagen 116 und die beiden Geflechtschläuche 125 sind in dem ersten Endbereich 125.1 mittels des Matrixmaterials 118 miteinander verbunden.

In einem zweiten Endbereich 125.2 des Querschnittes beider Geflechtschläuche 125, der dem ersten Endbereich 125.1 gegenüber liegt und die Außenkante der Lehnenstruktur 110 definiert, liegen die Konturen der Geflechtschläuche 125 unmittelbar ineinander und sind durch Matrixmaterial 118 umgeben und zueinander fixiert.

Toleranzen im Beschnitt und in der Ausrichtung der einzelnen Gewebelagen 116 sind durch die beschriebene überlappende Anordnung der Geflechtschläuche 125 zu den äußeren Ränder der einzelnen Gewebelagen 116 ausgeglichen, so dass die Außenkontur der Lehnenstruktur 110 unbeschnitten ist, aber dennoch durch die Geflechtschläuche 125 einen glatten und kontinuierlichen Konturverlauf hat.

In einer Abwandlung des Ausführungsbeispiels bildet nur genau ein Geflechtschlauch 125 abschnittsweise den äußeren, umlaufenden Randbereich der Lehnenstruktur 110. Die Gewebelagen 116 überlappen den Schlauch abschnittsweise, jedoch nicht bis zur Außenkontur der Lehnenstruktur 110.

In einer weiteren Abwandlung des Ausführungsbeispiels bildet ein flaches Gewebeband abschnittsweise den äußeren, umlaufenden Randbereich der Lehnenstruktur 110. Es sind auch zwei Gewebebänder denkbar, die die Ränder der Gewebelagen 116 entsprechend zwischen sich aufnehmen.

Die Lehnenstruktur 110 ist weitgehend spiegelsymmetrisch zu einer parallel zur Längsrichtung x und parallel zur Vertikalrichtung z durch die Sitzmitte verlaufenden Ebene.

Die Lehnenstruktur 110 umfasst, in Querrichtung y gesehen, in beiden äußeren Bereichen eine weitgehend eben ausgebildete Anbindungsfläche 112 zur Anbindung jeweils eines der beiden Beschlagoberteile 20. Die beiden Anbindungsflächen 112 verlaufen senkrecht zur Lehnenschwenkachse A und somit parallel zur Längsrichtung x und zur Vertikalrichtung z.

In den Figuren sind die beiden Anbindungsflächen 112 transparent dargestellt, so dass jeweils ein in den Bereichen der Anbindungsflächen 112 der Lehnenstruktur 110 eingearbeitetes Einlegeteil 140 sichtbar ist, obwohl dieses, wie nachfolgend noch näher beschrieben wird, von Gewebelagen 116 und Matrixmaterial 118 umgeben ist. Auch die von der Lehnenstruktur 110 teilweise verdeckten Beschlagoberteile 20 sind in den Figuren aufgrund der transparenten Darstellungsweise sichtbar.

Die beiden Einlegeteile 140 und die beiden Anbindungsflächen 112 sind zu einer in Längsrichtung x und in Vertikalrichtung z durch die Sitzmitte verlaufenden Spiegelebene symmetrisch zueinander aufgebaut, so dass nachfolgend nur eine Seite der Lehnenstruktur 110 beschrieben wird.

Das Einlegeteil 140 besteht aus Stahlblech, insbesondere Edelstahlblech oder einem Stahlblech mit Antikorrosionsbeschichtung, und umfasst eine weitgehend ebene Platte 141. In die Platte 141 sind drei Gewindebuchsen 142 mit einem Innengewinde 143 eingeschweißt. Die Mittellinien der Innengewinde 143 sind in Querrichtung y ausgerichtet. Im Bereich der Innengewinde 143 ist das Einlegeteil 140 nicht von Gewebelagen 116 oder Matrixmaterial 118 bedeckt.

Eine Zentrierbohrung 146 dient der Ausrichtung des Einlegeteils 140 in einem Werkzeug während der Herstellung der Lehnenstruktur 110, insbesondere auch der Ausrichtung zu dem in Querrichtung y gesehen gegenüberliegenden Einlegeteil 140. Alternativ zur Zentrierbohrung 146 oder zusätzlich zu dieser kann auch eine Gewindebuchse zum Anschrauben eines Zusatzbauteils, wie beispielsweise eines Elektromotors zum Antrieb der Beschläge 10, vorgesehen sein.

Die Platte 141 umfasst zudem mehrere Durchlässe 148, vorliegend kreisrunde Löcher mit jeweils einer Mittelachse parallel zur Querrichtung y und mit einem Durchmesser, der kleiner als der Durchmesser der Innengewinde 143 ist. Die Durchlässe 148 ermöglichen ein Hindurchtreten von viskosem Matrixmaterial 118 während des Herstellprozesses der Lehnenstruktur 110.

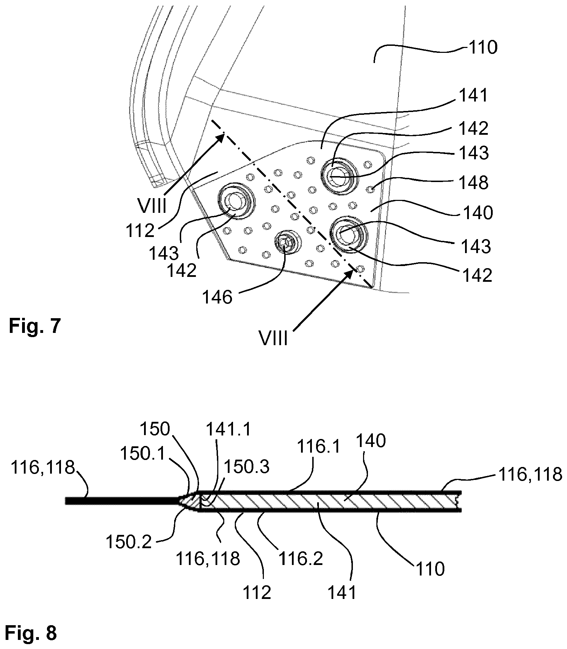

In Fig. 8 ist ein Schnitt durch die Lehnenstruktur 110 im Bereich des Einlegeteils 140 dargestellt. Eine der beiden flächigen Seiten des Einlegeteils 140 ist von einer ersten Lage 116.1 aus Gewebelagen 116 und Matrixmaterial 118 bedeckt, die andere flächige Seite des Einlegeteils 140 ist von einer zweiten Lage 116.2 aus Gewebelagen 116 und Matrixmaterial 118 bedeckt. Geringfügig beabstandet zu einer Kantenfläche 141.1 der Platte 141 laufen die erste Lage 116.1 und die zweite Lage 116.2 außerhalb des Bereiches der Platte 141 zusammen und bilden dort in monolithischer Weise einen einheitlichen Verbund aus Gewebelagen 116 und Matrixmaterial 118.

Im Übergangsbereich zwischen der Platte 141 und dem monolithischen Bereich aus Gewebelagen 116 und Matrixmaterial 118 ist aufgrund von minimal zulässigen Biegeradien der Gewebelagen 116 ein im Querschnitt dreieckiger, insbesondere keilförmiger Bereich ohne Gewebelagen 116 gebildet, der mit einem dreieckigen, insbesondere keilförmigen Einlegestrang 150 ausgefüllt ist. Der Einlegestrang 150 umfasst eine erste Seite 150.1, eine zweite Seite 150.2 und eine dritte Seite 150.3. In dem Übergangsbereich zwischen der Platte 141 und dem monolithischen Bereich liegt die erste Seite 150.1 an der ersten Lage 116.1 an, und die zweite Seite 150.2 liegt an der zweiten Lage 116.2 an. Eine dritte Seite 150.3 des Einlegestrangs 150 liegt an der durch die Blechstärke der Platte 141 definierten, umlaufenden Kantenfläche 141.1 des Einlegeteils 140 an.

Der Einlegestrang 150 ist vorliegend ein um die Außenkontur des Einlegeteils 140 umlaufender Glasfaserstrang und bewirkt durch seine Keilform einen kontinuierlichen, sanften Übergang zwischen dem monolithischen Bauteilbereich und dem Sandwichaufbau aus dem Einlegeteil 140 und den das Einlegeteil 140 insbesondere beidseitig umgebenden Gewebelagen 116 und dem Matrixmaterial 118.

Der Einlegestrang 150 kann in einer Abwandlung des Ausführungsbeispiels auch als Gummiband ausgeführt sein.

Das zweite Beschlagoberteil 20 ist vorliegend aus Stahlblech gefertigt und hat einen ebenen Grundkörper 22, der weitgehend parallel zur Längsrichtung x und zur Vertikalrichtung z verläuft und an der Anbindungsfläche 112 anliegt. Drei Durchgangslöcher 23 fluchten mit den drei Innengewinden 143 des Einlegeteils 140, so dass der Beschlag 10 an diesen Stellen an der Lehnenstruktur 110 anschraubbar ist. Die drei Gewindebuchsen 142 schließen bündig mit der Anbindungsfläche 112 ab oder stehen leicht über diese über, so dass der Grundkörper 22 des Beschlagoberteils 20 unmittelbar an den Stirnflächen der Gewindebuchsen 142 anliegt. Dadurch wird eine Beschädigung des Matrixmaterials 118 und/oder der Gewebelagen 116 vermieden.

In einer Abwandlung des Ausführungsbeispiels ist die Anbindungsfläche 112 leicht gegenüber einer senkrecht zur Lehnenschwenkachse A verlaufenden Ebene geneigt, vorzugsweise um 1 bis 5°.Der Grundkörper 22 des Beschlagoberteils 20 verläuft entsprechend schräg.

In einer weiteren Abwandlung des Ausführungsbeispiels sind statt der drei Gewindebuchsen 142 drei Buchsen ohne Innengewinde als Durchgangsbuchsen vorgesehen und die drei Durchgangslöcher 23 sind durch drei Innengewinde ersetzt. Die Schraubverbindung erfolgt in diesem Fall aus Richtung der Sitzmitte.

Entlang des äußeren Randes des Grundkörpers 22 weist das Beschlagoberteil 20 einen senkrecht zum Grundkörper 22 verlaufenden Flansch 24 auf, der zur Außenseite des Fahrzeugsitzes 1 orientiert ist.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein, solange der resultierende Gegenstand zum Schutzumfang gehört, der durch die Ansprüche definiert ist.

### Bezugszeichenliste

- 1: Fahrzeugsitz, Sportsitz
- 10: Beschlag
- 20: Beschlagoberteil
- 22: Grundkörper
- 23: Durchgangsloch
- 24: Flansch
- 30: Beschlagunterteil
- 110: Lehnenstruktur, Composite-Bauteil
- 112: Anbindungsfläche
- 116: Gewebelage
- 116.1: erste Lage
- 116.2: zweite Lage
- 118: Matrixmaterial
- 125: Gewebestrang, Geflechtschlauch
- 125.1: erster Endbereich
- 125.2: zweiter Endbereich
- 130: Kern
- 140: Einlegeteil
- 141: Platte
- 141.1: Kantenfläche
- 142: Gewindebuchse
- 143: Innengewinde
- 146: Zentrierbohrung
- 148: Durchlässe
- 150: Einlegestrang
- 150.1: erste Seite
- 150.2: zweite Seite
- 150.3: dritte Seite
- 180: Designschale
- 210: Sitzunterbaustruktur
- A: Lehnenschwenkachse
- x: Längsrichtung
- y: Querrichtung
- z: Vertikalrichtung

## Patentansprüche

1. Composite-Bauteil (110) für einen Fahrzeugsitz (1), insbesondere für einen Kraftfahrzeugsitz, mit mehreren Gewebelagen (116) aus einem Fasermaterial, einem die Gewebelagen (116) fixierenden Matrixmaterial (118) und einem zwischen wenigstens zwei der Gewebelagen (116) angeordneten Einlegeteil (140) zur lokalen Verstärkung des Composite-Bauteils (110), **dadurch gekennzeichnet, dass** ein Einlegestrang (150) zumindest abschnittsweise entlang einer Kante oder einer Kantenfläche (141.1) des Einlegeteils (140) angeordnet ist.

2. Composite-Bauteil (110) nach Anspruch 1, **dadurch gekennzeichnet, dass** eine flächige Seite des Einlegeteils (140) von einer ersten Lage (116.1) aus Gewebelagen (116) und Matrixmaterial (118) bedeckt ist und eine weitere flächige Seite des Einlegeteils (140) von einer zweiten Lage 116.2 aus Gewebelagen (116) und Matrixmaterial (118) bedeckt ist.

3. Composite-Bauteil (110) nach Anspruch 1 oder 2, **dadurch gekennzeichnet, dass** das Einlegeteil (140) lokal von Gewebelagen (116) und Matrixmaterial (118) unbedeckt ist.

4. Composite-Bauteil (110) nach Anspruch 3, **dadurch gekennzeichnet, dass** das Einlegeteil (140) mindestens eine Gewindebuchse (142) mit einem Innengewinde (143) zum Anschrauben eines Zusatzbauteils aufweist und das Einlegeteil (140) im Bereich der Gewindebuchse (142) von Gewebelagen (116) und Matrixmaterial (118) unbedeckt ist.

5. Composite-Bauteil (110) nach einem der Ansprüche 1 bis 4, **dadurch gekennzeichnet, dass** der Einlegestrang (150) ein längliches Profil ist.

6. Composite-Bauteil (110) nach Anspruch 5, **dadurch gekennzeichnet, dass** der Einlegestrang (150) einen gleichbleibenden Querschnitt über die gesamte Profillänge aufweist.

7. Composite-Bauteil (110) nach einem der Ansprüche 1 bis 6, **dadurch gekennzeichnet, dass** der Querschnitt des Einlegestrangs (150) annähernd dreieckförmig, insbesondere keilförmig ist.

8. Composite-Bauteil (110) nach einem der Ansprüche 1 bis 7, **dadurch gekennzeichnet, dass** der Querschnitt des Einlegestrangs (150) abgerundete Ecken aufweist.

9. Composite-Bauteil (110) nach einem der Ansprüche 1 bis 8, **dadurch gekennzeichnet, dass** das Material des Einlegestrangs (150) eine geringere Festigkeit als das Material der Gewebelagen (116) und/oder als das Matrixmaterial (118) aufweist.

10. Composite-Bauteil (110) nach einem der Ansprüche 1 bis 9, **dadurch gekennzeichnet, dass** der Einlegestrang (150) Glasfasern und die Gewebelagen (116) Carbon umfassen.

11. Composite-Bauteil (110) nach einem der Ansprüche 1 bis 10, **dadurch gekennzeichnet, dass** der Einlegestrang (150) ein Gummiband oder ein Kunststoffband ist.

12. Composite-Bauteil (110) nach einem der Ansprüche 1 bis 11, **dadurch gekennzeichnet, dass** das Einlegeteil (140) als ein Stanzteil aus Metall ausgebildet ist.

13. Composite-Bauteil (110) nach Anspruch 12, **dadurch gekennzeichnet, dass** das Einlegeteil (140) aus Stahl ausgebildet ist.

14. Composite-Bauteil (110) nach einem der Ansprüche 1 bis 11, **dadurch gekennzeichnet, dass** das Composite-Bauteil als Lehnenstruktur (110) für einen Fahrzeugsitz (1) oder als Bestandteil einer Lehnenstruktur (110) für einen Fahrzeugsitz (1) ausgebildet ist und ein Einlegeteil (140) zur Anbindung der Lehnenstruktur (110) an einen Beschlag (10) umfasst.

15. Fahrzeugsitz (1), insbesondere Kraftfahrzeugsitz, mit einem Composite-Bauteil, insbesondere einer Lehnenstruktur (110), nach einem der Ansprüche 1 bis 14.

## Claims

1. Composite component (110) for a vehicle seat (1), in particular for a motor vehicle seat, comprising a plurality of woven fabric layers (116) consisting of a fibrous material, a matrix material (118) securing the woven fabric layers (116), and an insert part (140), which is arranged between at least two of the woven fabric layers (116), for locally reinforcing the composite component (110), **characterized in that** an insert strand (150) is arranged at least in sections along an edge or an edge surface (141.1) of the insert part (140).

2. Composite component (110) according to Claim 1, **characterized in that** a surface side of the insert part (140) is covered by a first layer (116.1) of woven fabric layers (116) and matrix material (118), and a further surface side of the insert part (140) is covered by a second layer (116.2) of woven fabric layers (116) and matrix material (118).

3. Composite component (110) according to Claim 1 or 2, **characterized in that** the insert part (140) is not covered locally by woven fabric layers (116) and matrix material (118).

4. Composite component (110) according to Claim 3, **characterized in that** the insert part (140) has at least one threaded bushing (142) with an internal thread (143) for the screwing-on of an additional component, and the insert part (140) is not covered by woven fabric layers (116) and matrix material (118) in the region of the threaded bushing (142).

5. Composite component (110) according to one of Claims 1 to 4, **characterized in that** the insert strand (150) is an elongate profile.

6. Composite component (110) according to Claim 5, **characterized in that** the insert strand (150) has a constant cross section over the entire profile length.

7. Composite component (110) according to one of Claims 1 to 6, **characterized in that** the cross section of the insert strand (150) is approximately triangular, in particular wedge-shaped.

8. Composite component (110) according to one of Claims 1 to 7, **characterized in that** the cross section of the insert strand (150) has rounded corners.

9. Composite component (110) according to one of Claims 1 to 8, **characterized in that** the material of the insert strand (150) has a lower strength than the material of the woven fabric layers (116) and/or than the matrix material (118).

10. Composite component (110) according to one of Claims 1 to 9, **characterized in that** the insert strand (150) comprises glass fibers and the woven fabric layers (116) comprise carbon.

11. Composite component (110) according to one of Claims 1 to 10, **characterized in that** the insert strand (150) is a rubber band or a plastics band.

12. Composite component (110) according to one of Claims 1 to 11, **characterized in that** the insert part (140) is formed as a punched part made of metal.

13. Composite component (110) according to Claim 12, **characterized in that** the insert part (140) is formed from steel.

14. Composite component (110) according to one of Claims 1 to 11, **characterized in that** the composite component is designed as a back rest structure (110) for a vehicle seat (1) or as part of a back rest structure (110) for a vehicle seat (1) and comprises an insert part (140) for connecting the back rest structure (110) to a fitting (10).

15. Vehicle seat (1), in particular motor vehicle seat, comprising a composite component, in particular a back rest structure (110), according to one of Claims 1 to 14.

## Revendications

1. Pièce composite (110) pour un siège de véhicule (1), en particulier pour un siège de véhicule automobile, avec plusieurs couches de tissu (116) en un matériau fibreux, un matériau de matrice (118) fixant les couches de tissu (116) et une pièce d'insertion (140) disposée entre au moins deux des couches (116) pour le renforcement local de la pièce composite (110), **caractérisée en ce qu'**un cordon d'insertion (150) est disposé au moins partiellement le long d'un bord ou d'une face de bord (141.1) de la pièce d'insertion (140).

2. Pièce composite (110) selon la revendication 1, **caractérisée en ce qu'**un côté plat de la pièce d'insertion (140) est recouvert par une première couche (116.1) des couches de tissu (116) et par le matériau de matrice (118) et un autre côté plat de la pièce d'insertion (140) est recouvert par une deuxième couche (116.2) des couches de tissu (116) et par le matériau de matrice (118).

3. Pièce composite (110) selon la revendication 1 ou 2, **caractérisée en ce que** la pièce d'insertion (140) n'est pas recouverte localement par des couches de tissu (116) et par le matériau de matrice (118).

4. Pièce composite (110) selon la revendication 3, **caractérisée en ce que** la pièce d'insertion (140) présente au moins une douille filetée (142) avec un filet intérieur (143) pour le vissage d'une pièce supplémentaire et la pièce d'insertion (140) n'est pas recouverte par des couches de tissu (116) et par le matériau de matrice (118) dans la région de la douille filetée (142).

5. Pièce composite (110) selon l'une quelconque des revendications 1 à 4, **caractérisée en ce que** le cordon d'insertion (150) est un profilé allongé.

6. Pièce composite (110) selon la revendication 5, **caractérisé en ce que** le cordon d'insertion (150) présente une section transversale identique sur toute la longueur du profilé.

7. Pièce composite (110) selon l'une quelconque des revendications 1 à 6, **caractérisée en ce que** la section transversale du cordon d'insertion (150) est de forme approximativement triangulaire, en particulier en forme de coin.

8. Pièce composite (110) selon l'une quelconque des revendications 1 à 7, **caractérisée en ce que** la section transversale du cordon d'insertion (150) présente des coins arrondis.

9. Pièce composite (110) selon l'une quelconque des revendications 1 à 8, **caractérisée en ce que** le matériau du cordon d'insertion (150) présente une résistance moins élevée que le matériau des couches de tissu (116) et/ou que le matériau de matrice (118).

10. Pièce composite (110) selon l'une quelconque des revendications 1 à 9, **caractérisée en ce que** le cordon d'insertion (150) comprend des fibres de verre et les couches de tissu (116) comprennent du carbone.

11. Pièce composite (110) selon l'une quelconque des revendications 1 à 10, **caractérisée en ce que** le cordon d'insertion (150) est une bande de caoutchouc ou une bande de matière plastique.

12. Pièce composite (110) selon l'une quelconque des revendications 1 à 11, **caractérisée en ce que** la pièce d'insertion (140) est formée par une pièce estampée en métal.

13. Pièce composite (110) selon la revendication 12, **caractérisée en ce que** la pièce d'insertion (140) est réalisée en acier.

14. Pièce composite (110) selon l'une quelconque des revendications 1 à 11, **caractérisée en ce que** la pièce composite est réalisée sous la forme d'une structure de dossier (110) pour un siège de véhicule (1) ou sous la forme d'un composant d'une structure de dossier (110) pour un siège de véhicule (1) et comprend une pièce d'insertion (140) pour la liaison de la structure de dossier (110) à une ferrure (10).

15. Siège de véhicule (1), en particulier siège de véhicule automobile, avec une pièce composite, en particulier une structure de dossier (110) selon l'une quelconque des revendications 1 à 14.
